Europäisches Patentamt

European Patent Office

Office européen des brevets

(19)

(11) Publication number: **0 227 480 B1**

(12) **EUROPEAN PATENT SPECIFICATION**

(45) Date of publication of patent specification: **19.08.92**

(51) Int. Cl.5: **G11B 11/10**, G11B 13/00, G11B 13/04

(21) Application number: **86310117.6**

(22) Date of filing: **23.12.86**

(54) Magneto-optical recording.

(30) Priority: **27.12.85 JP 294858/85**

(43) Date of publication of application:
**01.07.87 Bulletin 87/27**

(45) Publication of the grant of the patent:
**19.08.92 Bulletin 92/34**

(84) Designated Contracting States:
**AT DE FR GB IT NL**

(56) References cited:
**EP-A- 0 217 096**

**PATENT ABSTRACTS OF JAPAN vol. 7, no. 216 (P-225)(1361) 24 September 1983, & JP-A-58 108045 (FUJI XEROX K.K.) 28 June 1983,**

**PATENT ABSTRACTS OF JAPAN vol. 8, no. 165 (P-291)(1602) 31 July 1984, & JP-A-59 060746 (RICOH K.K.) 06 April 1984,**

(73) Proprietor: **SONY CORPORATION**
**7-35 Kitashinagawa 6-chome Shinagawa-ku Tokyo 141(JP)**

(72) Inventor: **Horimai, Hideyoshi**
**c/o Sony Corporation 7-35 Kitashinagawa 6-chome**
**Shinagawa-ku Tokyo 141(JP)**
Inventor: **Kawakubo, Osamu**
**c/o Sony Corporation 7-35 Kitashinagawa 6-chome**
**Shinagawa-ku Tokyo 141(JP)**
Inventor: **Aoki, Yoshio**
**c/o Sony Corporation 7-35 Kitashinagawa 6-chome**
**Shinagawa-ku Tokyo 141(JP)**

(74) Representative: **Cotter, Ivan John et al**
**D. YOUNG & CO. 10 Staple Inn**
**London WC1V 7RD(GB)**

## Description

This invention relates to magneto-optical recording.

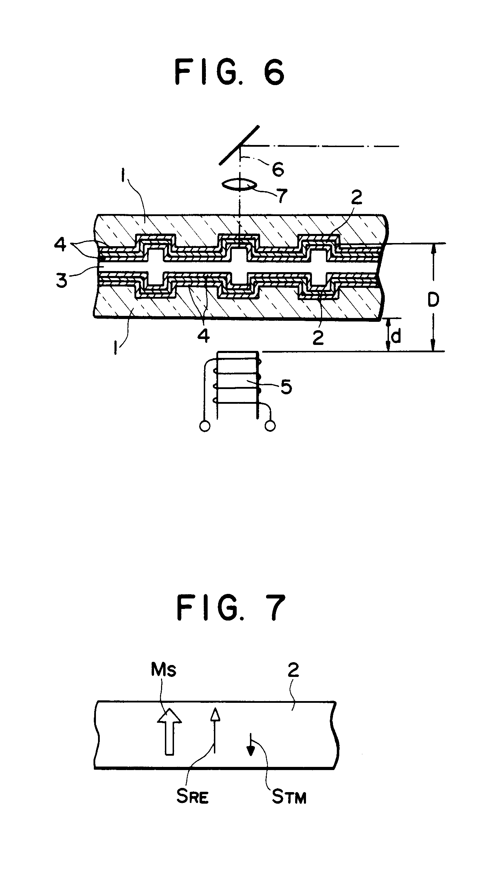

Figure 6 of the accompanying drawings is a sectional view of the structure of part of a previously proposed magneto-optical recording medium, for example a magneto-optical disc. As shown in Figure 6, a pair of transparent substrates 1 each have recording track position detecting grooves on the surface of one side thereof. A perpendicular anisotropy magnetic layer 2, formed of rare earth metal and transition metal, is formed by deposition on each of the surfaces where the grooves are formed. Then, the substrates 1 are bonded together by a layer 3 of an adhesive material with the perpendicular anisotropy magnetic layers 2 opposed to or facing each other. Protective layers 4 are formed by deposition between each substrate 1 and the associated magnetic layer 2 and between each magnetic layer 2 and the adhesive layer 3.

As shown in Figure 7 of the accompanying drawings, which is a schematic illustration of a magnetised condition of the recording medium (disc) shown in Figure 6, the perpendicular anisotropy magnetic layer 2 generates a perpendicular magnetisation Ms which is the sum of a rare earth metal spin $S_{RE}$ and a transition metal spin $S_{TM}$, the spins being of opposite senses and directed parallel to one another in the direction of the thickness of the layer, that is in the vertical direction as viewed in Figure 7.

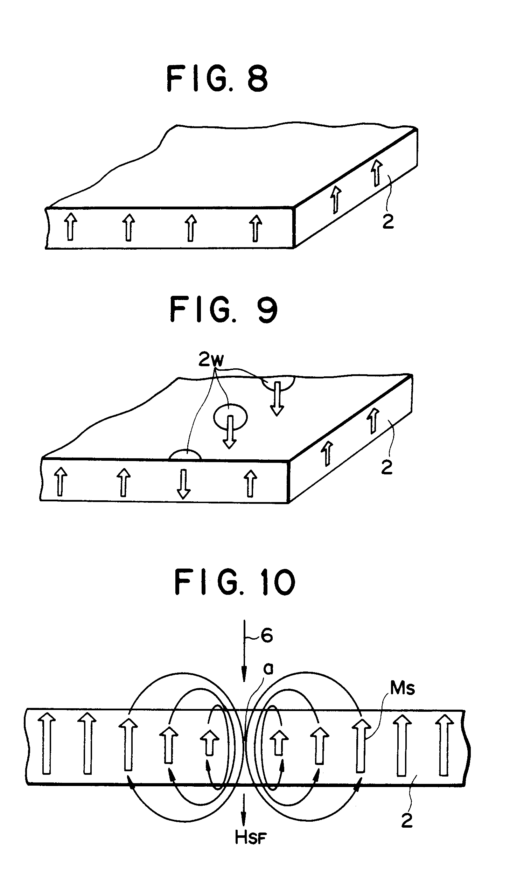

Recording on or to the perpendicular anisotropy magnetic layer 2 can be carried out by thermal magnetic recording, such as Curie temperature recording or compensation temperature recording. In the case of Curie temperature recording, an external magnetic field is applied to a portion on which a recording is to be made by a magnetic field generating means 5 shown in Figure 6. Under this condition, a laser beam 6 is directed through a condenser lens system 7 to irradiate the magnetic layer 2 to form a recording on the reverse side of the substrate 1. The laser beam 6 is focused on the magnetic layer 2, thereby heating the focused portion to a temperature higher than the Curie temperature and inverting a direction of magnetisation by the external magnetic field, thus effecting recording. In other words, in an erased or unrecorded condition, the direction of magnetisation is uniform as a whole, as shown in Figure 8 of the accompanying drawings. In contrast, in a recorded condition, the direction of magnetisation at recorded portions 2W is reversed as compared to that at other (unrecorded) portions, as shown in Figure 9 of the accompanying drawings.

Recording on or to the perpendicular anisotropy magnetic layer is suitable for high-density recording. The aforementioned thermal magnetic recording, such as Curie temperature recording or compensation temperature recording, commonly has the advantage that the external magnetic field required for recording or erasing information is markedly less than that required in the case of magnetic recording using a magnetic tape or a magnetic disc.

However, various problems are involved in applying an external magnetic field to this kind of magneto-optical recording medium. In a case in which the external magnetic field is applied only to a minute region of a perpendicular magnetisation layer, a method has been proposed in which a magnetic field is generated in a limited manner in the minute region by forming a conductor pattern by a fine patterning technique, such as a photolithography technique, and supplying electric current to the conductor pattern. However, in this method, technical and cost problems arise due to the application of a magnetic field to an arbitrary minute region of a large area.

Furthermore, the inductance of a winding used in generation of the magnetic field hinders driving of the magnetic field with a high frequency. To reduce the inductance of the winding, the number of turns of the winding has to be reduced. However, the reduction in the number of turns of the winding necessitates increasing the current in order to generate a desired magnetic field, resulting in a need for a large driving power source and an increase in power consumption.

Addtionally, the above-described previously proposed magneto-optical recording medium cannot permit over-writing. In a recording operation, a stray field $H_{SF}$ is generated by magnetisation in the periphery of an area where the temperature is elevated to the Curie temperature by irradiation by a laser beam of an area where a coercive force Hc is decreased in the case of compensation temperature recording and a permissible recording (reversal of magnetisation) temperature (hereinafter referred to as a recording temperature) is reached. As a result, particularly in erasing, the stray field acts in a reverse to eliminate or reduce the external magnetic field required for erasing information. Therefore, a large external magnetic field is required for erasing. Figure 10 of the accompanying drawing shows a condition where a part a of a perpendicular anisotropy magnetic laser 2 is heated to a Curie temperature or a recording temperature by irradiating the layer by means of a laser beam 6. While magnetisation at the part a is eliminated at the Curie temperature, for example, the stray field $H_{SF}$ is generated at the part a by the magnetisation Ms in the periphery of the part a. Accordingly, when an external magnetic field is applied to the part a to record or erase information, the effective magnetic field is affected by the stray field $H_{SF}$. In the case of recording, since a recorded portion has a magnetisation having a direction which is reversed with respect to that of the peripheral magnetisation, the external magnetic field $H_{exw}$ for recording has a direction which is the same as that of the stray field $H_{SF}$. However, the external magnetic field $H_{exe}$ for erasing has a direction which is reversed with respect to that of the stray field $H_{SF}$. Therefore, effective magnetic fields $H_{effw}$ and $H_{effe}$ in the cases of recording and erasing, respectively, are represented by the following equations:

$$H_{effw} = H_{SF} + H_{exw} \quad (1)$$
$$H_{effe} = -H_{SF} + H_{exe} \quad (2)$$

As the effective magnetic field in the case of erasing is small, the external magnetic field $H_{exe}$ should be increased.

In an ideal case, in which a sufficient inverted magnetic domain may be obtained without the external magnetic field $H_{exw}$, the effective magnetic field $H_{effw}$ in the case of recording will be provided by the stray field $H_{SF}$ only. However, even in such an ideal case, it is necessary to apply an external magnetic field $H_{exe}$, at least exceeding the stray field $H_{SF}$, when erasing magnetic field $H_{exe}$ having a strength about double that of the stray field $H_{SF}$ is required. Actually, about several hundreds to several thousands of oersteds (1 oersted = 79.58 A/m) of the external magnetic field are required for saturating the inverted magnetic domain upon recording. A magnetic field of such magnitude is required for external magnetic field $H_{exe}$ for erasing.

It is necessary to reduce the stray field $H_{SF}$ as much as possible, so as to reduce the external magnetic field $H_{exe}$ for erasing. The stray field $H_{SF}$ may be reduced to some extent by making the composition of the magnetic layer 2 nearly equal to a compensation composition which may reduce the saturation magnetisation Ms of the magnetic layer 2. However, the coercive force Hc is increased, which makes magnetising difficult and also makes inspection of a magneto-optical disc, for example as prepared, troublesome. This is caused by the fact that the inspection of such a disc is generally carried out by a measurement method using a vibrating sample magnetometer (VSM) capable of generating a magnetic field of about 1194 A/m (15 kOe). Therefore, another special measuring device has to be used, or the temperature is increased to reduce the coercive force Hc for measurement, which complicates the operation. Further, even when the magnetic layer 2 is prepared by reducing the saturation magnetization Ms only, without increasing the coercive force Hc, a recording condition is rendered unstable, and high-density recording cannot be carried out.

In magneto-optical recording, a magneto-optical head for magneto-optically recording information to or on, reproducing information from and erasing information from a magneto-optical recording medium, that is a magneto-optical head portion having laser beam irradiating means, an optical lens system and magnetic field generating means, is of a non-contact type, the head portion for scanning the recording medium being kept at a desired distance from the recording medium. Therefore, the magnetic field generating means is separated from the magnetic layer of the recording medium by a considerable distance. As shown in Figure 6, when a distance d between the magnetic field generating means 5 and the recording medium is set to 1 mm, for example, a distance D between the magnetic field generating means 5 and the magnetic layer 2 for recording, reproducing and erasing information by irradiation by the laser beam 6 reaches about 2.5 mm in view of the thickness of the substrate 1 and the adhesive layer 3. Therefore, it is necessary to provide a strong magnetic field generating means 5 capable of applying a magnetic field of several hundreds to several thousands of oersteds (1 oersted = 79.58 A/m) to the objective magnetic layer 2. However, the design of such a strong magnetic field generating means 5 is accompanied by technically serious problems. If the magnetic field generating means 5 is constituted by an electromagnet, for example, a problem of power consumption or heat generation will arise. If a permanent magnet is used for the magnetic field generating means 5, it is difficult to accelerate a switching cycle of recording, reproducing and erasing, that is an inversion speed of the magnetic field. When recording in a weak applied magnetic field, the carrier to noise (C/N) ratio is low, and when erasing in a weak applied magnetic field, previously recorded information cannot fully be erased. Therefore, in the case of re-recording, that is recording over (over-writing) any information on a previously recorded area, the possibility of information errors is increased.

Japanese Patent Application Publication No. JP-A-59 60746 discloses a magneto-optical recording medium including two magnetic layers made of amorphous rare earth-transition metal alloy in order to eliminate the need for a biasing field in the stage of recording.

European Patent Application Publication No. EP-A-0 217 096, which was published on 8 April 1987 and forms part of the state of the art as regards the present application only by virtue of EPC Article 54(3), discloses a magneto-optical recording arrangement comprising:

a magneto-optical recording medium comprising a magneto-optical recording layer and a bias magnetic layer formed on a substrate, the magneto-optical recording layer having a Curie temperature higher than room temperature, the bias magnetic layer having a compensation temperature near room temperature, and the magneto-optical recording layer and the bias magnetic layer being superposed with a non-magnetic layer therebetween; and

means capable of applying laser pulses of first and second durations to the magneto-optical recording medium, the first laser pulse duration being sufficient to heat the magneto-optical recording layer to a temperature higher than the Curie temperature of the magneto-optical recording layer and to heat the bias magnetic layer to a temperature sufficient for it to produce a significant bias magnetic field, and the second laser pulse duration being sufficient to heat the magneto-optical recording layer to a temperature higher than the Curie temperature of the magneto-optical recording layer while, due to thermal isolation provided by the non-magnetic layer, producing negligible heating of the bias magnetic layer.

Japanese Patent Application Publication No. JP-A-58 108045, an English Language abstract of which appears at Patent Abstracts of Japan, Vol. 7, Number 216(P-225)[1361], 24 September 1983, discloses a magneto-optical recording arrangement comprising: a magneto-optical recording medium comprising a magneto-optical recording layer and a ferromagnetic thin film formed on a transparent substrate, the magneto-optical recording layer and the ferromagnetic thin film being superposed with a non-magnetic layer therebetween; and means capable of applying a laser beam to the recording medium for recording and reproducing information. The ferromagnetic thin film enables magnetisation inversion with low laser power when recording information.

According to a first aspect of the invention there is provided a magneto-optical recording method comprising:

preparing a magneto-optical recording medium comprising a magneto-optical recording layer and a bias magnetic layer formed on a transparent substrate, the magneto-optical recording layer having a Curie temperature higher than room temperature, the bias magnetic layer having a compensation temperature lower than a Curie temperature and higher than room temperature, and the magneto-optical recording layer and the bias magnetic layer being superposed with a non-magnetic layer therebetween; and

applying heating to the magneto-optical recording medium at first and second heating power levels, the first heating power level being sufficient to heat the magneto-optical recording layer to a temperature higher than the Curie temperature of the magneto-optical recording layer and to heat the bias magnetic layer to a temperature higher than the compensation temperature of the bias magnetic layer, and the second heating power level being sufficient to heat the magneto-optical recording layer to a temperature higher than the Curie temperature of the magneto-optical recording layer while keeping the bias magnetic layer below the compensation temperature of the bias magnetic layer.

According to a second aspect of the invention there is provided a magneto-optical recording arrangement comprising:

a magneto-optical recording medium comprising a magneto-optical recording layer and a bias layer formed on a transparent substrate, the magneto-optical recording layer having a Curie temperature higher than room temperature, the bias magnetic layer having a compensation temperature lower than a Curie temperature and higher than room temperature, and the magneto-optical recording layer and the bias magnetic layer being superposed with a non-magnetic layer therebetween; and

heating means capable of applying first and second heating power levels to the magneto-optical recording medium, the first heating power level being sufficient to heat the magneto-optical recording layer to a temperature higher than the Curie temperature of the magneto-optical recording layer and to heat the bias magnetic layer to a temperature higher than the compensation temperature of the bias magnetic layer, and the second heating power level being sufficient to heat the magneto-optical recording layer to a temperature higher than the Curie temperature of the magneto-optical recording layer while keeping the bias magnetic layer below the compensation temperature of the bias magnetic layer.

Preferred embodiments of the present invention described in detail hereinbelow provide an improved magneto-optical recording system. The improved magneto-optical recording system can achieve over-writing of information. Over-writing of information can be accomplished by using a laser beam having two levels of power.

The invention will now be further described, by way of illustrative and non-limiting example, with reference to the accompanying drawings, in which:

Figure 1 is a sectional view of 9 magneto-optical recording medium that can be employed in embodiments of the present invention;

Figures 2A and 2B are graphs showing magnetic characteristics of a bias magnetic layer and a magneto-optical recording layer of the magneto-optical recording medium with respect to temperature;

Figures 3A to 3D are illustrations showing magnetised conditions, in operation, of the magneto-optical recording medium;

Figures 4A and 4B are graphs showing magnetic characteristics of the bias magnetic layer and the magneto-optical recording layer with respect to temperature;

Figure 5 is a graph showing measured results of coercive forces of the bias magnetic layer and the magneto-optical recording layer with respect to temperature;

Figure 6 is a sectional view of a previously proposed magneto-optical recording medium described hereinabove;

Figure 7 is an illustration showing a magnetised condition of the previously proposed recording medium;

Figure 8 is an illustration showing magnetisation in an erased condition;

Figure 9 is an illustration showing magnetistion in a recorded condition; and

Figure 10 is an illustration showing generation of a stray field.

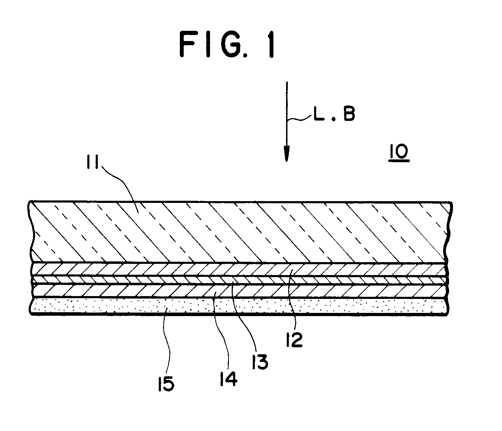

Figure 1 shows a magneto-optical recording medium 10 employed in embodiments of the invention described hereinbelow. The magneto-optical recording medium 10 is formed by depositing a magneto-optical recording layer 12, a non-magnetic layer 13, a bias magnetic layer 14 and a protective layer 15 in the foregoing order onto one major surface of a transparent substrate 11.

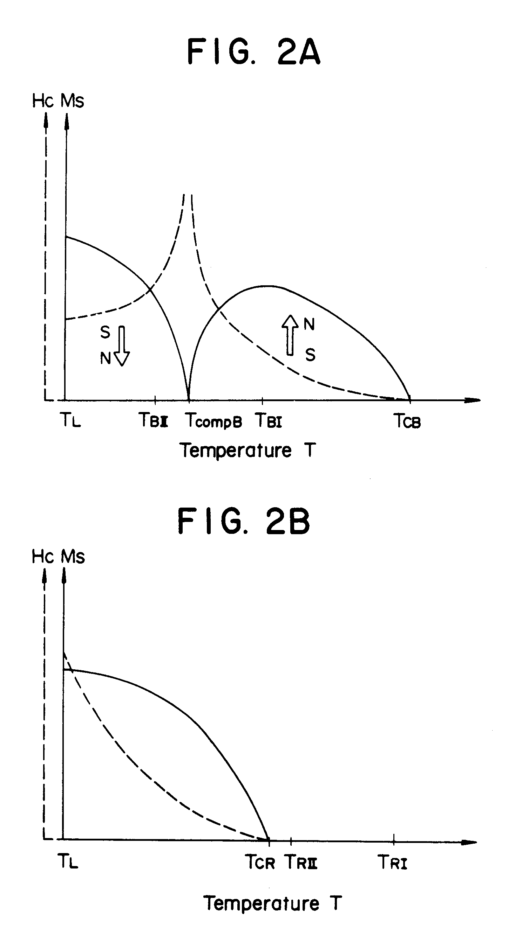

Referring to Figure 2A, the temperature characteristic of the saturation magnetisation $M_s$ of the bias magnetic layer 14 is shown by a solid line, and a spontaneous magnetisation condition is shown by arrows. The bias magnetic layer 14 has a compensation temperature $T_{compB}$ in a desired operational temperature range, for example in a temperature range between room temperature $T_L$ and a desired temperature (first high operational temperature) $T_{BI}$ higher than the room temperature $T_L$, and has characteristics such that the direction of spontaneous magnetisation is inverted across the compensation temperature $T_{compB}$, and further has a Curie temperature $T_{CB}$ exceeding the temperature $T_{BI}$. Such characteristics may be attained by a ferrimagnetic material, for example a rare earth metal-transition metal alloy. As described hereinabove with reference to Figure 7, the spin $S_{RE}$ of the rare earth metal element is parallel to the spin $S_{TM}$ of the transition metal element with the directions of the spins being reversed or opposite to one another. The two spins have independent temperature characteristics such that, as the temperature increases, the magnitude of a magnetic moment varies. Therefore, the magnitude and direction of magnetisation, dependent upon the magnetic moment, vary with temperature so as thereby to obtain the characteristics in which the direction of spontaneous magnetisation is inverted across the compensation temperature $T_{compB}$. In this case, the temperature characteristics of a coercive force Hc are shown by a dotted line curve in Figure 2A.

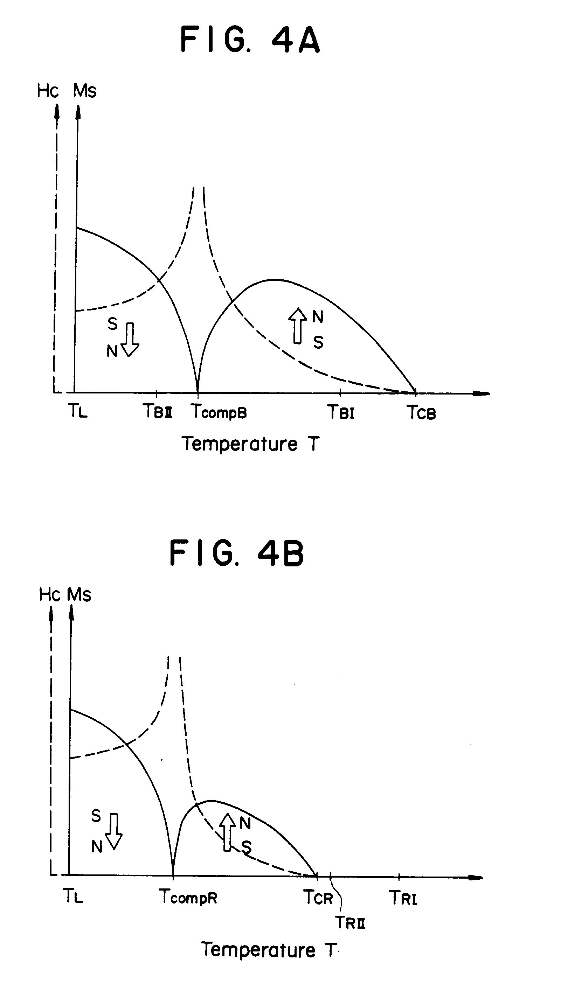

The magneto-optical recording layer 12 is formed of a rare earth metal-transition metal magnetic material having a Curie temperature $T_{CR}$ between room temperature $T_L$ and a recording temperature (first high operational temperature) $T_{RI}$, which will explained later, as shown by a solid line in Figure 2B. Considering the case when only one laser beam is used for recording, the Curie temperature $T_{CR}$ is selected to be higher than the compensation temperature $T_{compB}$ of the bias magnetic layer 14 and lower than the recording temperature $T_{RI}$. Alternatively, as shown by a solid line in Figure 4A, the bias magnetic layer 14 may be formed of a magnetic material having characteristics such that the compensation temperature $T_{compB}$ falls in the operational temperature range of $T_L$ to $T_{BI}$ of the bias magnetic layer 14. On the other hand, the magneto-optical recording layer 12 may be formed of a magnetic material having characteristics such that the compensation temperature $T_{compR}$ falls in the operational temperature range of $T_L$ to $T_{RI}$ of the magneto-optical recording layer 12, as shown by a solid line in Figure 4B. Temperature characteriscs of coercive forces Hc of the bias magnetic layer 14 and the magneto-optical recording layer 12 are shown by dotted line curves in Figures 4A and 4B, respectively.

The non-magnetic layer 13 interposed between the magneto-optical recording layer 12 and the bias magnetic layer 14 is formed of a heat insulating material having a thickness such that a magnetic field due to the spontaneous magnetisation of the bias magnetic layer 14 may affect the magneto-optical recording layer 12, and whereby the magnetic layers 12 and 14 may be coupled magnetostatically with each other, but isolated to avoid exchange interaction therebetween, and, further, the magnetic layers 12 and 14 may be thermally separated from each other to some extent.

Recording information to, over-writing information on and erasing of information from the magneto-optical recording medium 10 is carried out by selective heating utilising irradiation by a laser beam or the like wherein a first and a second power level (heating power level) may be selected.

The first heating power level gives rise to a heating condition in which the magneto-optical recording layer 12 is heated to a temperature near to or higher than the Curie temperature and, simultaneously, the bias magnetic layer 14 is heated to a temperature exceeding the compensation temperature. The second heating power level gives rise to a heating condition in which the magneto-optical recording layer 12 is heated to a temperature near to or higher than the Curie temperature and, simultaneously, the bias magnetic layer 14 is heated to a temperature lower than the compensation temperature. In a final stage of production of the magneto-optical recording medium 10, for example, a magnetic field is uniformly applied to the entire surface of the medium in the direction of the thickness of the layers to magnetise both the magneto-optical recording layer 12 and the bias magnetic layer 14 in the same direction. Figure 3A shows such a condition, that is, an unrecorded (non-information) condition.

Recording, over-writing and erasing of information may be carried out by scanning the magneto-optical recording medium 10 with a laser beam L.B, from the side of the transparent substrate 11 remote from the layers 12 to 15, as shown in Figure 1, and adopting the heating conditions determined by the first and second power levels.

The following description relates to a case in which the magneto-optical recording layer 12 is constituted by a magnetic layer having the temperature characteristics shown in Figure 2B.

An explanation will first be given of how recording of information is carried out by changing magnetisations having reversed directions in regions I and II of the magneto-optical recording layer 12, as shown in Figure 3C, from the unrecorded non-information) condition in which the magneto-optical recording medium 10 is perpendicularly magnetised in one direction, as shown in Figure 3A. In this case, the region I is heated at the first (high) power level mentioned above. That is, the laser beam L.B is focused on the magneto-optical recording layer 12 from the side of the transparent substrate II remote from the layer 12 to thereby heat the recording layer 12 to a temperature near the Curie temperature $T_{CR}$ of the recording layer 12 or to the first high operational temperature $T_{RI}$ higher than the Curie temperature. In concert with this high-temperature heating, the bias magnetic layer 14 is heated to the first high operational temperature $T_{BI}$ higher than the compensation temperature $T_{compB}$ of the magnetic layer 14 and lower than the Curie temperature $T_{CB}$ of the magnetic layer 12. Thus, the direction of magnetisation in the region I of the bias magnetic layer 14 is inverted, as shown in Figure 3B, by heating the bias magnetic layer 14 to a temperature higher than the compensation temperature $T_{compB}$. Under this condition, when the laser beam L.B. is moved away for example, the layers 12 to 14 are cooled in the region I to allow the magneto-optical recording layer 12 to reach the Curie temperature $T_{CR}$. Although the bias magnetic layer 14 is also cooled, it is still maintained at a temperature higher than the compensation temperature $T_{compB}$ at this time, and the direction of magnetisation in the region I of the bias magnetic layer 14 is maintained in the condition, as shown in Figure 3B, in which it is reversed from the initial condition shown in Figure 3A. To this end, magnetisation generated in the region I of the magneto-optical recording layer 12 is inverted from the intial condition shown in Figure 3A by magnetic coupling with the bias magnetic layer 14 and a stray field of the bias magnetic layer around the region I. Under this condition, the layers 12 to 14 in the region I are cooled to room temperature $T_L$, and the bias magnetic layer 14 is cooled again to a temperature near room temperature $T_L$ or lower than the compensation temperature $T_{compB}$, as shown by the solid line in Figure 2A, so as thereby to invert the magnetisation to the initial condition. However, the coercive force Hc of the magneto-optical recording layer 12 is increased by the reduction in temperature, as shown by the dotted line curve in Figure 2A, and therefore the magneto-optical recording layer 12 is hardly influenced by the magnetisation of the bias magnetic layer 14. To this end, the magneto-optical recording layer 12 in the region I is maintained in the condition shown in Figure 3C, which is reversed from the initial condition shown in Figure 3A. Accordingly, in the magneto-optical recording layer 12, the direction of magnetisation in the region I is different from that in the region II, as shown in Figure 3C, thereby effecting recording of information. Provided that the region II where the initial direction of magnetisation is maintained is regarded as a recording part, the region I will serve as an erasing part.

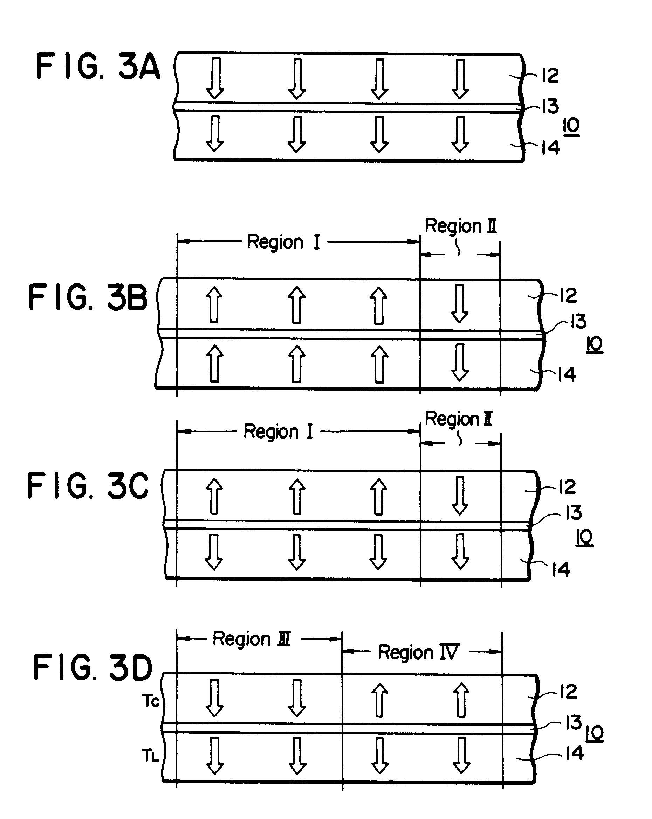

A description will now be given of how overwriting of information to the medium 10, on which information has been recorded as shown in Figure 3C, can effected. In this case, as shown Figure 3D, a recording part is formed by a region III, which comprises part of the region I, and an erasing part is formed by a region IV, which comprises parts of each of the regions I and II. In the region III (recording part), the heating condition of the second power level is effected. That is to say, the region III is irradiated by a laser beam L.B to heat the magneto-optical recording layer 12 to a second operational temperature $T_{RII}$ higher than the Curie temperature $T_{CR}$ of the magneto-optical recording layer and lower than the first operational temperature $T_{RI}$, as shown in Figure 2B, thereby heating the bias magnetic layer 14 to a temperature $T_{BII}$ lower than the compensation temperature $T_{compB}$ of the bias magnetic layer 14, as shown in Figure 2A. Thus, although magnetisation of the magneto-optical recording layer 12 is lost by heating the layer 12 to the temperature higher than the Curie temperature $T_{CR}$, when the heating by the laser beam is removed the magnetisation direction of the magneto-optical recording layer is determined by a stray field of the magneto-optical recording layer around the region, and oriented in the same direction as the bias magnetic layer 14. In this case, the direction of the magnetisation in the bias magnetic layer 14 is pointing in a direction not to avoid magnetostatic coupling of the two layers. In the region IV, the operation at the first power level, as conducted in the region I, is also conducted. In this way, information having the pattern shown in Figure 3D, which is different from the information having the pattern shown in Figure 3C, may be rewritten by an over-writing operation.

Reading of information from the magneto-optical recording medium 10 may be carried out similarly by irradiation by the laser beam from the side of the substrate 11 remote from the layers 12 to 15. In this case, the power level of the laser beam in the magneto-optical recording layer 12 is selected to be such that the recording layer 12 is heated to a temperature lower than the Curie temperature $T_{CR}$ and the bias magnetic layer 14 is heated to a temperature lower than the compensation temperature. Thus, reading is carried out by a magneto-optical effect.

The above description relates to a case in which the magneto-optical recording layer 12 is formed by a magnetic layer excluding a compensation temperature from its operational temperature range. Naturally, even in a case in which the magnetic layer includes the compensation temperature $T_{compR}$ in its operational temperature range, recording, erasing and over-writing of information can be carried out effectively by use of the first and second power levels as described above. However, no problem occurs in this case since the direction of magnetisation of the magneto-optical recording layer 12 is dependent upon the temperature lower than the Curie temperature $T_{CR}$ and higher than the compensation temperature $T_{compR}$. This is caused by the fact that a coercive force Hc is increased in a temperature region near the compensation temperature $T_{compR}$, as shown in Figure 4B, and it is not affected magnetically by the bias magnetic layer 14. However, in this case, the magnetisation relation between the recording part and the erasing part in the magneto-optical recording layer 12 and the bias magnetic layer 14 is reversed.

In the case in which the coercive force Hc of the magneto-optical recording layer 12 is reduced near the Curie temperature or at a temperature lower than the Curie temperature, and magnetisation is inverted by the magnetic field from the bias magnetic layer 14, the non-magnetic layer 13 may be a film which may hinder exchange interaction between the magneto-optical recording layer 12 and the bias magnetic layer 14. Therefore, the layers 12 and 14 may be separated by a distance corresponding to a layer thickness of two to three atoms. For example, the non-magnetic layer 13 may be formed of a surface oxide layer of the magneto-optical recording layer 12. Further, theoretically, the non-magnetic layer 13 need only provide a slight heat insulating effect.

The above explanation relates to a case in which one laser beam is used. However, if the condition is satisfied that the magneto-optical recording layer 12 and the bias magnetic layer 14 are magnetostatically coupled and the temperatures of both layers are indpendently controlled, it is possible to achieve operation by using two laser beams, one for heating the magneto-optical recording layer 12, and another for heating the bias magnetic layer 14.

As explained above, the above-described arrangement works basically without applying an external magnetic field. However, for better recording and erasing, a weak static external magnetic field may be applied. The external magnetic field should satisfy the condition that the direction points to the magnetisation direction to be recorded and the strength is sufficient to magnetically saturate the magneto-optical recording layer upon recording, though the strength is weak enough to magnetically saturate the magneto-optical recording layer upon erasing, where the vector sum of the stray field at the erased region and the exernal magnetic field is applied to the magneto-optical recording layer.

An example will now be given of how the magneto-optical recording medium 10 may be constructed. The transparent substrate 11 is a plate formed of glass or of a resin such as polycarbonate resin. The substrate 11 has a tracking groove (not shown) formed on its major surface as required. The magneto-optical recording layer 12 formed on the major surface is a magnetic layer of $Tb_{21}$-$(FE_{95}Co_5)_{79}$ having a thickness of, for example, 300 to 800 angstroms, for example 500 angstroms.

The non-magnetic layer 13 is formed of $SiO_2$, $Si_3N_4$, ZnS, oxides of rare earth metal elements, yttria ($Y_2O_3$) or alumina ($Al_2O_3$). If $Si_3N_4$ isused, the thickness of the non-magnetic layer 13 may be 100 to 400 angstroms, for example 200 angstroms.

The bias magnetic layer 14 is formed of $Tb_{21.8}Co_{78.2}$ having a thickness of, for example, 250 to 1800 angstroms, for instance 800 angstroms.

The protective layer 15 is formed of $Si_3N_4$, ZnS or SiO.

The thickness of the non-magnetic layer 13 and the magnetic temperature characteristics or composition and the thickness of the bias magnetic layer 14 are dependent upon the operational temperature of the bias magnetic layer and the effective magnetic field acting on the recording layer 12. Further, in order to let the magnetisation of the magneto-optical recording layer 12 follow the effective magnetic field, the temperature characteristics of the magneto-optical recording layer 12 should also be taken into consideration as an important parameter. Furthermore, since the direction of magnetisation of the magneto-optical recording layer 12 is dependent upon magnetic energy to be applied to the magneto-optical recording layer 12, that is the magnetisation Ms of the bias magnetic layer 14 and the above-mentioned effective magnetic field, the thickness of the magneto-optical recording layer 12 should be increased when the effective magnetic field is small.

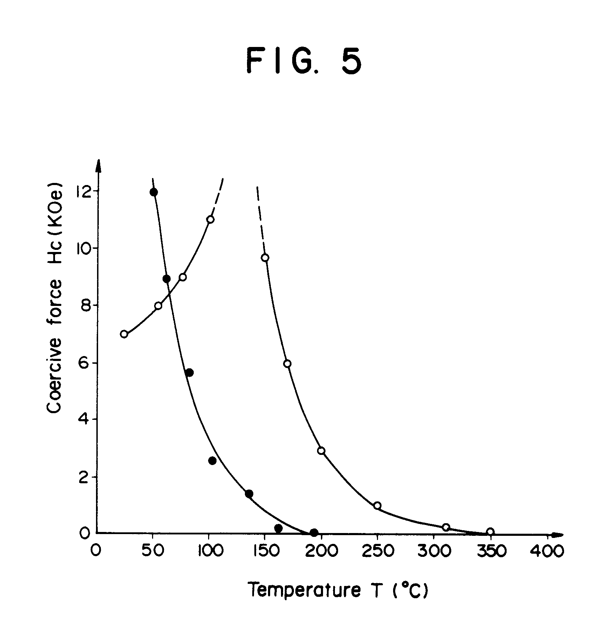

Figure 5 shows temperature characteristics of coercive force Hc, the characteristic for the bias magnetic layer of $Tb_{21.8}Co_{78.2}$ being shown by blank (empty) dots and the characteristic for the magneto-optical recording layer of $Tb_{21}(Fe_{95}Co_5)_{79}$ being shown by solid dots.

Although the preferred embodiment employs a laser beam for changing the orientation of magnetisation of the bias magnetic layer 14, that is for effecting recording, erasing and over-writing, the heating operation may be carried out by using an electron beam.

Further, another protective layer may be interposed between the magneto-optical layer 12 and the substrate 11, so that a change in temperature increase and decrease in terms of time may be controlled having regard to thermal diffusion due to the thickness and material of both the protective layers sandwiching the layers 12 to 13.

According to the arrangement described above, over-writing can be effected, and recording and erasing also can be effected, without the use of an external magnetic field generating means such as a permanent magnet or a coil, by selecting the heating power of laser beam irradiation of the magneto-optical recording medium 10 and thereby switching a bias magnetic field for the magneto-optical recording layer 12. A bias magnetic field generating means comprising the bias magnetic layer 14 is provided in the medium 10 itself and arranged substantially adjacent to the magneto-optical recording layer 12, thereby greatly reducing spacing loss. Thus, it is possible remarkably to reduce power consumption for carrying out recording, erasing and re-recording of information. Moreover, the present arrangement may provide many important advantages, such as device simplicity, increased switching speed and improved resolution.

## Claims

1. A magneto-optical recording method comprising:

preparing a magneto-optical recording medium (10) comprising a magneto-optical recording layer (12) and a bias magnetic layer (14) formed on a transparent substrate (11), the magneto-optical recording layer (12) having a Curie temperature higher than room temperature, the bias magnetic layer (14) having a compensation temperature lower than a Curie temperature and higher than room temperature, and the magneto-optical recording layer (12) and the bias magnetic layer (14) being superposed with a non-magnetic layer (13) therebetween; and

applying heating to the magneto-optical recording medium (10) at first and second heating power levels, the first heating power level being sufficient to heat the magneto-optical recording layer (12) to a temperature higher than the Curie temperature of the magneto-optical recording layer (12) and to heat the bias magnetic layer (14) to a temperature higher than the compensation temperature of the bias magnetic layer (14), and the second heating power level being sufficient to heat the magneto-optical recording layer (12) to a temperature higher than the Curie temperature of the magneto-optical recording layer (12) while keeping the bias magnetic layer (14) below the compensation temperature of the bias magnetic layer (14).

2. A method according to claim 1, wherein the heating is applied by a laser beam (L.B) having the first and second heating power levels.

3. A method according to claim 1 or claim 2, wherein the bias magnetic layer (14) is formed of ferrimagnetic material.

4. A magneto-optical recording arrangement comprising:

a magneto-optical recording medium (10) comprising a magneto-optical recording layer (12) and a bias magnetic layer (14) formed on a transparent substrate (11), the magneto-optical recording layer (12) having a Curie temperature higher than room temperature, the bias magnetic layer (14) having a compensation temperature lower than a Curie temperature and higher than room temperature, and the magneto-optical recording layer (12) and the bias magnetic layer (14) being superposed with a non-magnetic layer (13) therebetween; and

heating means capable of applying first and second heating power levels to the magneto-optical recording medium (10), the first heating power level being sufficient to heat the magneto-optical recording layer (12) to a temperature higher than the Curie temperature of the magneto-optical recording layer (12) and to heat the bias magnetic layer (14) to a temperature higher than the compensation temperature of the bias magnetic layer (14), and the second heating power level being sufficient to heat the magneto-optical recording layer (12) to a temperature higher than the Curie temperature of the magneto-optical recording layer (12) while keeping the bias magnetic layer (14) below the compensation temperature of the bias magnetic layer (14).

5. An arrangement according to claim 4, wherein the heating means comprises means for generating a laser beam (L.B) having the first and second power levels.

6. An arrangement according to claim 4 or claim 5, wherein the bias magnetic layer (14) is formed of ferrimagnetic material.

**Patentansprüche**

1. Verfahren zur magneto-optischen Aufzeichnung, mit Schritten zum
Präparieren eines magneto-optischen Aufzeichnungsmediums (10) das eine magneto-optische Aufzeichnungsschicht (12) und eine Vormagnetisierungs-Schicht (14) umfaßt, die auf einen transparenten Substrat (11) ausgebildet sind, wobei die magneto-optische Aufzeichnungsschicht (12) eine Curie-Temperatur hat, die höher als die Raum-Temperatur ist, wobei die Vormagnetisierungsschicht (14) eine Kompensations-Temperatur hat, die niedriger als eine Curie-Temperatur und höher als die Raum-Temperatur ist, und wobei zwischen die magneto-optische Aufzeichnungsschicht (12) und die Vormagnetisierungsschicht (14) eine nichtmagnetische Schicht (13) geschichtet ist, und
Anwenden eines Prozesses zum Aufheizen der magneto-optischen Aufzeichnungsschicht (10) bei einem ersten und einem zweiten Aufheizenergieniveau, wobei das erste Aufheizenergieniveau ausreichend ist, um die magneto-optische Aufzeichnungsschicht (12) auf eine Temperatur aufzuheizen, die höher als die Curie-Temperatur der magnetooptischen Aufzeichnungsschicht (12) ist und um die Vormagnetisierungsschicht (14) auf eine Temperatur aufzuheizen, die höher als die Kompensations-Temperatur der Vormagnetisierungsschicht (14) ist, und wobei das zweite Aufheizenergieniveau ausreichend ist, um die magneto-optische Aufzeichnungsschicht (12) auf eine Temperatur aufzuheizen, die höher als die Curie-Temperatur der magneto-optischen Aufzeichnungsschicht (12) ist, während die Vormagnetisierungsschicht (14) unterhalb der Kompensations-Temperatur der Vormagnetisierungsschicht (14) gehalten wird.

2. Verfahren nach Anspruch 1, bei dem das Aufheizen durch einen Laserstrahl (L.B) vorgenommen wird, der das erste und das zweite Aufheizenergieniveau hat.

3. Verfahren nach Anspruch 1 oder 2, bei der die Vormagnetisierungsschicht (14) aus einem ferrimagnetischen Material gebildet ist.

4. Anordnung zur magneto-optischen Aufzeichnung, die umfaßt: ein magneto-optisches Aufzeichnungsmedium (10), das eine magneto-optische Aufzeichnungsschicht (12) und eine Vormagnetisierungsschicht (14) enthält, die auf einem transparenten Substrat (11) gebildet sind, wobei die magneto-optische Aufzeichnungsschicht (12) eine Curie-Temperatur hat, die höher als die Raum-Temperatur ist, die Vormagnetisierungsschicht (14) eine Kompensations-Temperatur hat, die niedriger als eine Curie-Temperatur und höher als die Raum-Temperatur ist, und wobei zwischen die magneto-optische Aufzeichnungsschicht (12) und die Vormagnetisierungsschicht (14) eine nichtmagnetische Schicht (13) geschichtet ist, und
ein Aufheizmittel, das in der Lage ist, ein erstes und ein zweites Aufheizenergieniveau auf das magneto-optische Aufzeichnungsmedium (10) einwirken zu lassen, wobei das erste Aufheizenergieniveau ausreichend ist, um die magneto-optische Aufzeichnungsschicht (12) auf eine Temperatur aufzuheizen, die höher als die Curie-Temperatur der magneto-optischen Aufzeichnungsschicht (12) ist, und die Vormagnetisierungsschicht (14) auf eine Temperatur aufzuheizen, die höher als die Kompensations-Temperatur der Vormagnetisierungsschicht (14) ist, und wobei das zweite Aufheizenergieniveau ausreichend ist, um die magneto-optische Aufzeichnungsschicht (12) auf eine Temperatur aufzuheizen, die höher als die Curie-Temperatur der magneto-optischen Aufzeichnungsschicht (12) ist, während die Vormagnetisierungsschicht (14) unter der Kompensations-Temperatur der Vormagnetisierungsschicht (14) gehalten wird.

5. Vorrichtung nach Anspruch 4, bei der das Aufheizmittel Mittel zum Erzeugen eines Laserstrahls (L.B) umfaßt, der das erste und das zweite Energieniveau hat.

6. Vorrichtung nach Anspruch 4 oder 5, bei der die Vormagnetisierungsschicht (14) aus einem ferrimagnetischen Material gebildet ist.

**Revendications**

1. Un procédé d'enregistrement magnéto-optique comprenant les opérations suivantes :

   on prépare un support d'enregistrement magnéto-optique (10) comprenant une couche d'enregistrement magnéto-optique (12) et une couche magnétique de polarisation (14) formées sur un substrat transparent (11), la couche d'enregistrement magnéto-optique (12) ayant une température de Curie supérieure à la température ambiante, la couche magnétique de polarisation (14) ayant une température de compensation inférieure à une température de Curie et supérieure à la température ambiante, et la couche d'enregistrement magnéto-optique (12) et la couche magnétique de polarisation (14) étant superposées avec interposition d'une couche non magnétique (13) entre elles ; et

   on chauffage le support d'enregistrement magnéto-optique (10) avec des premier et second niveaux de puissance de chauffage, le premier niveau de puissance de chauffage étant suffisant pour chauffer la couche d'enregistrement magnéto-optique (12) jusqu'à une température supérieure à la température de Curie de la couche d'enregistrement magnéto-optique (12), et pour chauffer la couche magnétique de polarisation (14) jusqu'à une température supérieure à la température de compensation de la couche magnétique de polarisation (14), et le second niveau de puissance de chauffage étant suffisant pour chauffer la couche d'enregistrement magnéto-optique (12) jusqu'à une température supérieure à la température de Curie de la couche d'enregistrement magnéto-optique (12), tout en maintenant la couche magnétique de polarisation (14) au-dessous de la température de compensation de cette couche magnétique de polarisation (14).

2. Un procédé selon la revendication 1, dans lequel le chauffage est appliqué un faisceau laser (L.B) ayant les premier et second niveaux de puissance de chauffage.

3. Un procédé selon la revendication 1 ou 2, dans lequel la couche magnétique de polarisation (14) est constituée par un matériau ferrimagnétique.

4. Une structure d'enregistrement magnéto-optique comprenant :

   un support d'enregistrement magnéto-optique (10) comprenant une couche d'enregistrement magnéto-optique (12) et une couche magnétique de polarisation (14) formées sur un substrat transparent (11), la couche d'enregistrement magnéto-optique (12) ayant une température de Curie supérieure à la température ambiante, la couche magnétique de polarisation (14) ayant une température de compensation inférieure à une température de Curie et supérieure à la température ambiante, et la couche d'enregistrement magnéto-optique (12) et la couche magnétique de polarisation (14) étant superposées avec une couche non magnétique (13) interposée entre elles ; et

   des moyens de chauffage capables d'appliquer des premier et second niveaux de puissance de chauffage au support d'enregistrement magnéto-optique (10), le premier niveau de puissance de chauffage étant suffisant pour chauffer la couche d'enregistrement magnéto-optique (12) jusqu'à une température supérieure à la température de Curie de la couche d'enregistrement magnéto-optique (12), et pour chauffer la couche magnétique de polarisation (14) jusqu'à une température supérieure à la température de compensation de la couche magnétique de polarisation (14), et le second niveau de puissance de chauffage étant suffisant pour chauffer la couche d'enregistrement magnéto-optique (12) jusqu'à une température supérieure à la température de Curie de la couche d'enregistrement magnéto-optique (12), tout en maintenant la couche magnétique de polarisation (14) au-dessous de la température de compensation de cette couche magnétique de polarisation (14).

5. Une structure selon la revendication 4, dans laquelle les moyens de chauffage comprennent des moyens qui sont destinés à produire un faisceau laser (L.B) ayant les premier et second niveaux de puissance.

6. Une structure selon la revendication 4 ou la revendication 5, dans laquelle la couche magnétique de polarisation (14) est constituée par un matériau ferrimagnétique.

# FIG. 1

L . B

10

11

12

13

15    14

# FIG. 2A

Hc Ms

S N↓

↑ N S

TL  TBⅡ  TcompB  TBⅠ  TcB

Temperature T

# FIG. 2B

Hc Ms

TL  TcR TRⅡ  TRⅠ

Temperature T

FIG. 3A

12
13
14
10

Region I

Region II

FIG. 3B

12
13
10
14

Region I

Region II

FIG. 3C

12
13
10
14

Region III

Region IV

FIG. 3D

Tc
TL

12
13 10
14

# FIG. 4A

# FIG. 4B

# FIG. 5

# FIG. 6

# FIG. 7

# FIG. 8

# FIG. 9

# FIG. 10